# FASCICULE DE BREVET EUROPEEN

(11) **EP 2 417 400 B1**
(45) Date de publication et mention de la délivrance du brevet: **01.11.2017**
(21) Numéro de dépôt: 10713212.8
(22) Date de dépôt: 09.04.2010
(51) Int. Cl.: F24F 13/06, F24F 13/12, F24F 7/10, A01K 1/00

(54) **CHEMINEE D'ENTREE D'AIR POUR UN SYSTEME D'AERATION**
LUFTEINLASSSCHACHT FÜR EIN LÜFTUNGSSYSTEM
AIR INLET SHAFT FOR A VENTILATION SYSTEM

(30) Priorité: 10.04.2009 FR 0952378
(43) Date de publication de la demande: 15.02.2012
(73) Titulaire: I Tek, 22250 Tremeur (FR)
(72) Inventeur: LESNARD, Pierre, F-22250 Tremeur (FR)
(74) Mandataire: Le Guen-Maillet
(86) Numéro de dépôt international: PCT/EP2010/054693
(87) Numéro de publication internationale: WO 2010/115975

(56) Documents cités:
- EP-A- 1 918 650
- WO-A-95/10739
- JP-A- 63 233 232
- US-A1- 2005 266 792

## Description

La présente invention concerne une cheminée d'entrée d'air comportant des moyens de régulation pour un système d'aération d'un bâtiment, un système d'aération comportant au moins une telle cheminée d'entrée d'air et un bâtiment comportant au moins un tel système d'aération.

Les systèmes d'aération connus pour un bâtiment par exemple du type porcherie comportent par exemple des cheminées d'entrée d'air qui sont montées entre deux cases contigües d'une même rangée, et qui sont prévues pour aspirer vers le haut de l'air pur circulant sous ladite rangée via une entrée d'air. Ces systèmes d'aération comportent en outre, par exemple en bout de rangée, des moyens mécaniques couplés à une sortie d'air qui sont prévus pour créer une dépression à l'intérieur de la porcherie, de sorte à permettre l'aspiration par lesdites cheminées d'entrée d'air de l'air admis via ladite entrée.

Ces systèmes visent à éviter une forte concentration de gaz toxiques azotés, notamment à l'intérieur de la porcherie, et à procurer ainsi auxdits animaux des conditions d'hygiène satisfaisantes.

Chaque cheminée d'entrée d'air comporte une entrée inférieure disposée en dessous du plancher des cases et une sortie supérieure disposée au dessus du plancher des cases et sous le plafond du bâtiment. Pour réguler le volume d'air en sortie de la sortie supérieure, un volet mobile en rotation autour d'un axe sensiblement horizontal est prévu. Le volet est disposé à l'intérieur de la cheminée d'entrée d'air et il est déplacé de manière à permettre une obturation plus ou moins complète de la cheminée d'entrée d'air.

Bien qu'un tel volet donne satisfaction, sa mise en oeuvre peut parfois être complexe. Le document WO 95/10739 A montre une cheminée d'entrée d'air pour un système d'aération correspondant au préambule de la revendication 1. Un objet de la présente invention est de proposer une cheminée d'entrée d'air pour un système d'aération selon la revendication 1. Selon un mode de réalisation particulier, lesdits moyens de régulation affleurent l'orifice inférieur d'entrée.

Selon un autre mode de réalisation particulier, lesdits moyens de régulation affleurent l'orifice supérieur de sortie.

Avantageusement, le volet prend la forme d'un coulisseau, et le dispositif à glissière prend la forme d'un rail sur lequel coulisse ledit coulisseau.

Avantageusement, le volet prend la forme d'un coulisseau, et le dispositif à glissière prend la forme de deux équerres en L fixées de part et d'autre du conduit et le coulisseau coulisse sur les deux bras horizontaux des équerres.

Avantageusement, le conduit est constitué d'une pluralité de conduites qui s'étendent entre l'orifice inférieur d'entrée et l'orifice supérieur de sortie.

Avantageusement, les conduites sont disposées les unes à la suite des autres dans la direction de translation du volet.

L'invention propose également un système d'aération d'un bâtiment comportant un plancher, un plafond et au moins une rangée de cases destinées à être occupées par au moins un animal, ledit système comportant:
- au moins une entrée d'air pur du bâtiment,
- au moins une sortie d'air vicié du bâtiment,
   la ou chaque entrée d'air pur ou la ou chaque sortie d'air vicié étant couplée à des moyens d'aspiration de l'air prévus pour créer une surpression ou une dépression d'air à l'intérieur du bâtiment, et
- au moins une cheminée d'entrée d'air selon l'une des variantes précédentes dont les conduits traversent le plancher, dont les orifices inférieurs d'entrée sont disposés en dessous dudit plancher et communiquent avec la ou au moins une desdites entrée d'air pur, et dont les orifices supérieurs de sortie sont disposés au-dessus du plancher et en dessous du plafond et communiquent avec la ou au moins une desdites sorties d'air vicié.

Avantageusement, le système d'aération comporte une unité prévue pour commander les moyens de régulation.

L'invention propose également un bâtiment comportant:
- un plancher,
- un plafond,
- au moins une rangée de cases destinées à être occupées par au moins un animal, et
- un système d'aération selon l'une des variantes précédentes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue schématique et en coupe transversale partielle d'une rangée de cases qui est pourvue d'un système d'aération selon l'invention,
la Fig. 2 est une vue en perspective et en écorché d'une cheminée d'entrée d'air selon l'invention en position de fermeture,
la Fig. 3 est une vue en perspective et en écorché de ladite cheminée d'entrée d'air en position d'ouverture intermédiaire,
la Fig. 4 est une vue en perspective et en écorché de ladite cheminée d'entrée d'air en position d'ouverture complète,
la Fig. 5 montre une vue des moyens de régulation selon la flèche A de la Fig. 1,
la Fig. 6 montre une vue des moyens de régulation selon un autre mode de réalisation de l'invention, et
la Fig. 7 montre un système d'aération selon un autre mode de réalisation de l'invention.

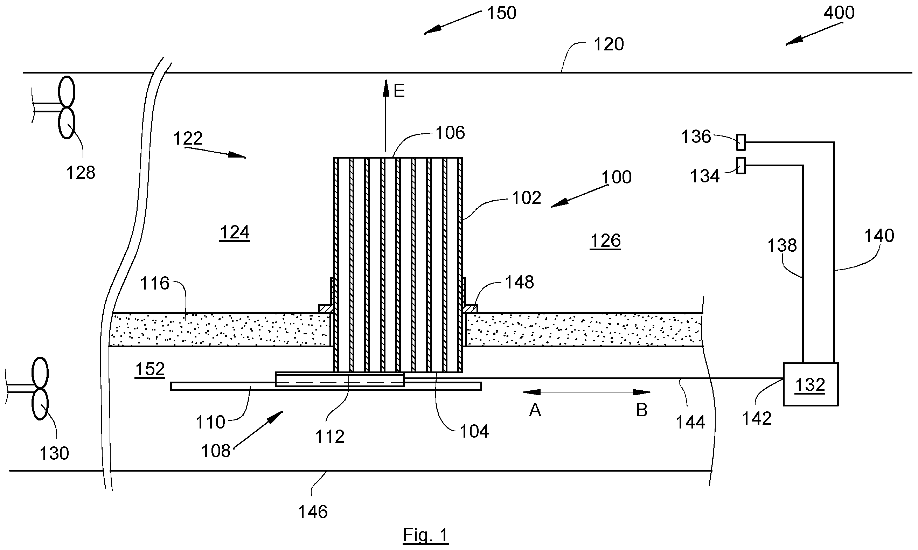

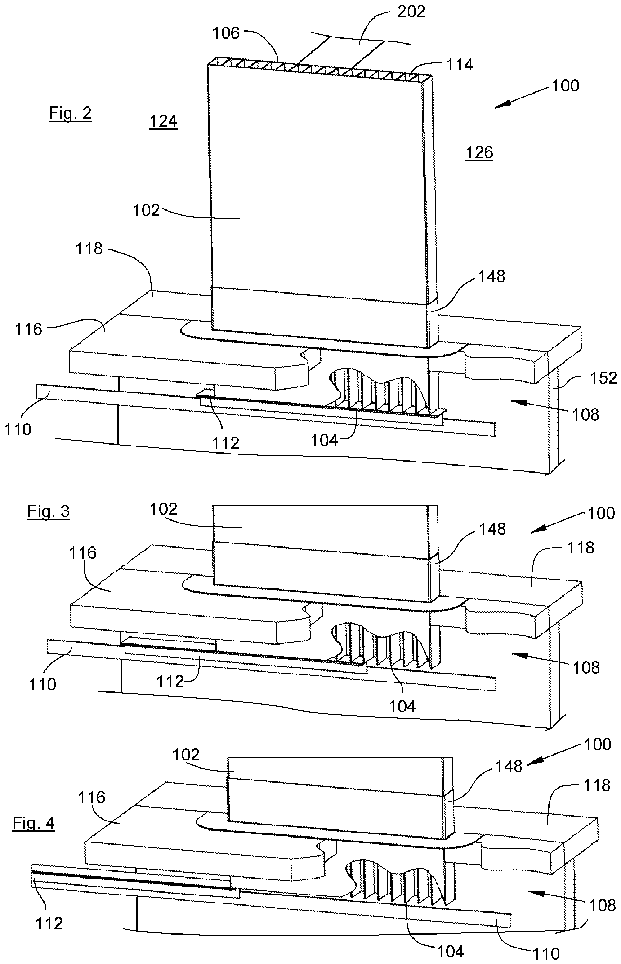

Dans l'exemple de réalisation de la Fig 1, on a représenté de manière partielle une rangée 122 de cases 124 et 126, par exemple de porcherie, qui sont situées sous un plafond 120 d'un bâtiment 400. La Fig. 2 montre une vue en perspective du mode de réalisation de l'invention de la Fig. 1 où les cases 124 et 126 sont séparées par un mur de séparation 202.

Chaque case 124, 126 de la rangée 122 comporte un plancher 118 du type caillebotis prévu pour recevoir au moins un animal et qui permet de définir, sous ledit caillebotis, un espace d'évacuation destiné à recevoir les déjections des animaux. Devant les cases 124 et 126 est disposé un plancher 116 qui sert par exemple de couloir de passage. Le plancher 116 est par exemple du type dalle de béton et permet de définir, sous ladite dalle, un espace protégé qui ne peut pas être atteint par lesdites déjections.

Pour séparer au mieux ledit espace d'évacuation et ledit espace protégé, un mur 152 vertical est prévu entre les planchers 116 et 118 et une dalle de fondation 146.

Un système d'aération 150 est prévu pour ventiler l'espace compris entre chaque case 124, 126 de la rangée 122 et le plafond 120.

Le système d'aération 150 selon l'invention comporte au moins une cheminée d'entrée d'air 100. Dans le mode de réalisation de l'invention présenté ici, la cheminée d'entrée d'air 100 est montée sur le plancher 116 du couloir de passage et, au front du plancher 118 des cases 124 et 126.

Dans le mode de réalisation de l'invention présenté sur la Fig. 2, la cheminée d'entrée d'air 100 est en appui contre le mur de séparation 202 qui est ici perpendiculaire à la cheminée d'entrée d'air 100. Mais la cheminée d'entrée d'air 100 peut ne pas être en appui contre un mur ou être en appui contre un mur qui s'étend parallèlement à ladite cheminée d'entrée d'air 100 ou dans toutes autres configurations possibles.

Chaque cheminée d'entrée d'air 100 comporte un conduit 102 et présente dans sa partie inférieure une collerette 148 qui est prévue pour reposer sur le plancher 118 de chaque case 124, 126 et le plancher 116 du couloir de passage qu'elle chevauche. Le conduit 102 présente un orifice inférieur d'entrée 104 et un orifice supérieur de sortie 106.

Le système d'aération 150 comporte également au moins une entrée d'air pur (non représentée), par exemple sous le plancher 116 du couloir de passage, qui est prévue pour communiquer avec l'orifice inférieur d'entrée 104 de chaque cheminée d'entrée d'air 100. L'entrée d'air pur permet l'entrée de l'air pur extérieur à l'intérieur du bâtiment 400.

L'orifice inférieur d'entrée 104 de chaque conduit 102 se trouve sous le plancher 116 du couloir de passage. Quant à l'orifice supérieur de sortie 106 de chaque conduit 102, il est situé au-dessus des planchers 116 et 118 et en dessous du plafond 120 du bâtiment 400.

Dans l'exemple de la Fig. 1, l'entrée d'air pur est prévue pour communiquer avec l'espace protégé entre le mur 152, le plancher 116 et la dalle de fondation 146, de telle sorte que l'air admis par l'entrée d'air pur sous le plancher 116 du couloir de passage ne soit pas en contact avec les déjections.

Le système d'aération 150 comporte en outre, par exemple en bout de chaque rangée 122, des moyens mécaniques d'aspiration de l'air 128, 130 couplés à une sortie d'air vicié disposée soit au-dessus soit au-dessous des planchers 116 et 118, et qui sont prévus pour créer une dépression d'air à l'intérieur de la porcherie 400, de sorte à permettre l'aspiration par les cheminées d'entrée d'air 100 de l'air admis par l'entrée d'air pur. Les orifices supérieurs de sortie 106 communiquent avec la sortie d'air vicié qui permet d'expulser l'air vicié depuis l'intérieur du bâtiment 400 vers l'extérieur.

Ces moyens d'aspiration 128 et 130 sont par exemple constitués d'au moins un ventilateur d'extraction. Dans le cas où les moyens d'aspiration 130 sont en-dessous des planchers 118, ils sont disposés dans l'espace d'évacuation de manière à créer un courant d'aspiration qui traverse les planchers 118 des cases 124 et 126. Dans le cas où les moyens d'aspiration 130 sont en-dessus des planchers 116 et 118, ils sont disposés au-dessous du plafond 120.

Chaque cheminée d'entrée d'air 100 est pourvue de moyens de régulation 108 prévus pour faire varier le volume d'air traversant le conduit 102 entre son orifice inférieur d'entrée 104 et son orifice supérieur de sortie 106.

Les moyens de régulation 108 sont constitués d'un volet 112 et d'un dispositif à glissière 110. Le dispositif à glissière 110 est monté fixe par rapport au conduit 102 sous le plancher 116 du couloir de passage, c'est-à-dire dans l'espace protégé, et le volet 112 est monté mobile en translation sur le dispositif à glissière 110. Le volet 112 est mobile entre une position fermée dans laquelle il obture l'orifice inférieur d'entrée 104 et une position ouverte dans laquelle il n'obture pas l'orifice inférieur d'entrée 104. Le volet 112 peut prendre toute les positions intermédiaires entre la position ouverte et la position fermée.

Le volet 112 est solidaire d'un système de tringle 144 qui est relié à la sortie d'une unité de commande 132.

Le système de tringle 144 et l'unité de commande 132 sont installés ici en dessous du plancher 116 du couloir de passage.

L'unité de commande 132 comporte une ou plusieurs entrées de commande 138 et 140 qui sont respectivement reliées à une ou plusieurs sondes 134 et 136 (ici au nombre de deux). Les sondes 134 et 136 sont positionnées entre la surface des planchers 116 et 118 et le plafond 120. Elles sont respectivement prévues pour mesurer des caractéristiques de l'air ambiant, telles que la température et le degré d'humidité, par exemple.

L'unité de commande 132 est prévue pour commander via le système de tringle 144, en fonction des valeurs fournies à ses entrées 138 et 140 par l'une au moins des sondes 134 et 136, le déplacement en translation du volet 112 par rapport au dispositif à glissière 110 de la cheminée d'entrée d'air 100 correspondante (flèches A et B pour les deux sens possibles du déplacement).

Le système de tringle 144 peut être relié à un ou plusieurs volets 112.

Le système d'aération 150 est prévu pour réguler le volume d'air en sortie de chaque conduit 102 de manière à ce que la vitesse de l'air qui est expulsé en sortie de chaque conduit 102 ait une valeur constante dans le temps et suffisante pour que l'air quittant l'orifice supérieur de sortie 106 parvienne toujours jusqu'au plafond 120 de la porcherie 400 (flèche E).

Les Figs. 2 à 4 montrent une cheminée d'entrée d'air 100 dont les moyens de régulation 108 sont respectivement en position fermée, en position intermédiaire et en position complètement ouverte.

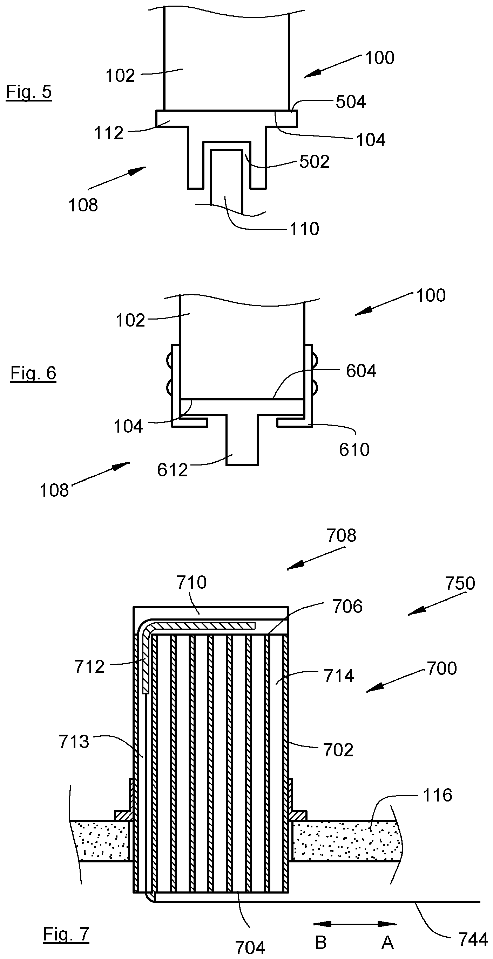

La Fig. 5 montre un mode de réalisation particulier des moyens de régulation 108.

Le volet 112 prend ici la forme d'un coulisseau en T qui coulisse sur le dispositif à glissière 110 qui prend ici la forme d'un rail. Le volet 112 présente à cet effet une fente longitudinale 502 qui s'emmanche sur le rail 110.

La face supérieure 504 du volet 112 vient affleurer l'orifice inférieur d'entrée 104 du conduit 102.

En fonction de la position du volet 112, l'orifice inférieur d'entrée 104 est plus ou moins ouvert et le volume d'air aspiré varie en conséquence.

La Fig. 6 montre un autre mode de réalisation particulier des moyens de régulation 108.

Le volet 612 prend ici la forme d'un coulisseau en T qui coulisse sur le dispositif à glissière 610 qui prend ici la forme de deux équerres en L fixées de part et d'autre du conduit 102 par exemple à l'aide de vis. Le volet 612 coulisse sur les deux bras horizontaux des équerres 610 qui sont orientés l'un vers l'autre.

La face supérieure 604 du volet 612 vient affleurer l'orifice inférieur d'entrée 104 du conduit 102.

En fonction de la position du volet 612, l'orifice inférieur d'entrée 104 est plus ou moins ouvert et le volume d'air aspiré varie en conséquence.

Le conduit 102 de la cheminée d'entrée d'air 100 est constitué d'une pluralité de conduites 114 qui s'étendent de manière rectiligne entre l'orifice inférieur d'entrée 104 et l'orifice supérieur de sortie 106.

Les conduites 114 sont disposées les unes à la suite des autres dans la direction de translation du volet 112, 612. Ainsi lorsque le volet 112, 612 se déplace vers sa position ouverte, il ouvre les conduites 114 les unes après les autres.

La présence des conduites 114 garantit que l'air qui est aspiré par l'orifice inférieur d'entrée 104 sorte effectivement par l'orifice supérieur de sortie 106 et n'est pas absorbé par des perturbations à l'intérieur du volume du conduit 102. En effet, en cas d'absence des ces conduites 114, le conduit 102 présente un grand volume intérieur et si une faible quantité d'air est aspirée à travers l'orifice inférieur d'entrée 104, il est dilué à l'intérieur de ce grand volume et sort avec une vitesse plus faible par l'orifice supérieur de sortie 106.

La Fig. 7 montre un système d'aération 750 selon un autre mode de réalisation de l'invention qui est mis en place dans un bâtiment comportant un plancher 116.

Le système 750 comporte au moins une cheminée d'entrée d'air 700 comportant elle-même:
- un conduit 702 présentant un orifice inférieur d'entrée 704 et un orifice supérieur de sortie 706, et
- des moyens de régulation 708 affleurant l'orifice supérieur de sortie 706 et mobile entre une position fermée dans laquelle ils obturent l'orifice supérieur de sortie 706 et une position ouverte dans laquelle ils n'obturent pas l'orifice supérieur de sortie 706.

Le conduit 702 de la cheminée d'entrée d'air 700 est constitué d'une pluralité de conduites 714 qui s'étendent de manière rectiligne entre l'orifice inférieur d'entrée 704 et l'orifice supérieur de sortie 706.

Les moyens de régulation 708 sont constitués d'un dispositif à glissière 710 fixe par rapport au conduit 702 et d'un volet souple 712 monté mobile en translation sur le dispositif à glissière 710. Le dispositif à glissière 710 est ici monté sur le conduit 702 au niveau de l'orifice supérieur de sortie 706 et prend par exemple la forme de deux rainures se faisant face et entre lesquelles se déplace le volet 712, comme cela est représenté sur la Fig. 6.

Le volet 712 est solidaire d'un système de tringle 744 qui est relié à la sortie d'une unité de commande.

Dans le mode de réalisation de l'invention présenté sur la Fig. 7, le volet 712 et le système de tringle 744 se déplacent dans un couloir 713 qui s'étendent de manière rectiligne entre l'orifice inférieur d'entrée 704 et l'orifice supérieur de sortie 706.

Le système de tringle 744 s'étend sous le plancher 116, pour des raisons d'encombrement dans le bâtiment, mais il pourrait s'étendre au-dessus du plancher 116.

Sur la Fig. 7, le volet 712 est dans une position d'ouverture intermédiaire.

Le système d'aération 150, 750 d'une rangée 122 de cases 124 et 126 fonctionne de la manière suivante.

Lorsqu'aucune aération du bâtiment 400 n'est requise, le volet 112, 612, 712 de chaque cheminée d'entrée d'air 100, 700 d'une rangée 122 occupe la position de fermeture comme représentée à la Fig. 2.

En fonction des valeurs fournies en entrée de l'unité de commande 132 par les sondes 134 et 136, l'unité 132 commande par sa sortie 142 un déplacement du système de tringle 144, 744, il en résulte un même déplacement du volet 112, 612, 712 dans le sens A ou B, et, par conséquent, une même valeur déterminée du volume d'air admis dans chaque cheminée d'entrée d'air 100, 700.

Si les valeurs fournies par les sondes 134 et 136 sont telles que les caractéristiques de l'air dans la porcherie 400 exigent de diminuer le volume d'air traversant chaque conduit 102, 702, pour maintenir à la valeur constante et minimale la vitesse de l'air aspiré à l'orifice supérieur de sortie 106, 706 de chaque cheminée d'entrée d'air 100, 700, alors l'unité 132 réagit de la manière suivante.

Elle commande le déplacement de chaque volet 112, 612, 712, via sa sortie 142, dans le sens de la flèche B, ce qui diminue le volume d'air admis à traverser le conduit 102, 702, de telle sorte que la vitesse de sortie retrouve sa valeur constante et que l'air quittant chaque cheminée d'entrée d'air 100, 700 atteigne le plafond 120.

Si au contraire, les valeurs fournies en entrée de commande par les sondes 134 et 136 imposent d'augmenter le volume d'air traversant chaque conduit 102, 702, alors l'unité 132 commande le déplacement de chaque volet 112, 612, 712, dans le sens de la flèche A, ce qui augmente le volume d'air admis à traverser dans le conduit 102, 702, de telle sorte que la vitesse de sortie retrouve sa valeur constante et que l'air quittant chaque cheminée d'entrée d'air 100, 700 atteigne le plafond 120.

Il en résulte une aération satisfaisante et prolongée de chaque case 124, 126 de la rangée 122 au niveau de son plancher 118 et, par conséquent, de chaque animal l'occupant.

Le système d'aération 150, 750 selon l'invention présente l'avantage de réguler la vitesse de l'air quittant l'orifice supérieur de sortie 106, 706 de chaque conduit 102, 702 à une valeur minimale requise pour que chaque partie du plafond 120 en regard dudit conduit 102, 702 soit aérée, en fonction d'au moins une caractéristique de l'air ambiant de la rangée 122 correspondante de cases 124 et 126.

De plus, l'aération qui en résulte permet de réduire d'une manière significative la concentration en gaz toxiques dans les cases 124 et 126 au niveau de leurs planchers 118 respectifs et, par conséquent, d'améliorer les conditions d'hygiène pour les animaux occupant lesdites cases 124 et 126.

On notera qu'un système d'aération 150, 750 selon l'invention pourrait comporter plusieurs systèmes de tringle 144, 744 distincts prévus pour commander d'une manière indépendante le déplacement du volet 112, 612, 712 de chaque cheminée d'entrée d'air 100, 700, de telle sorte que le débit d'air quittant chaque cheminée d'entrée d'air 100, 700 soit adapté aux animaux occupant les cases 124 et 126 contigües à la cheminée d'entrée d'air 100, 700.

Bien entendu, la présente invention n'est pas limitée aux exemples et modes de réalisation décrits et représentés, mais elle est susceptible de nombreuses variantes accessibles à l'homme de l'art.

Par exemple, l'invention a été plus particulièrement décrite dans le cas où une dépression est réalisée dans le bâtiment, mais elle s'applique de la même manière dans le cas d'une surpression.

Les moyens mécaniques d'aspiration de l'air sont alors couplés à l'entrée d'air pur et aspire l'air pur depuis l'extérieur et le repousse à l'intérieur du bâtiment en le faisant traverser les cheminée depuis l'orifice inférieur d'entrée jusqu'à l'orifice supérieur de sortie. Les moyens mécaniques d'aspiration sont ainsi prévus pour créer une surpression d'air à l'intérieur de la porcherie.

## Revendications

1. Cheminée d'entrée d'air (100, 700) pour un système d'aération (150, 750)d'un bâtiment, la cheminée d'entrée d'air (100, 700) comportant:
- un conduit (102, 702) apte à traverser un plancher (116) du bâtiment et présentant un orifice inférieur d'entrée (104, 704) apte à être disposé au-dessous du plancher (116) et un orifice supérieur de sortie (106, 706) apte à être disposé au-dessus du plancher (116), et
- des moyens de régulation (108, 708) comportant un volet (112, 612, 712) monté mobile par rapport audit conduit (102, 702) entre une position fermée et une position ouverte,
la cheminée d'entrée d'air (100, 700) étant **caractérisée en ce que** l'une des faces dudit volet (112, 612, 712) affleure l'un desdits orifices (104, 704, 106, 706) et **en ce que** le volet (112, 612, 712) est mobile en translation et **en ce qu'**en position fermée il obture ledit orifice (104, 704, 106, 706) et **en ce qu'**en position ouverte il n'obture pas ledit orifice (104, 704, 106, 706).

2. Cheminée d'entrée d'air (100, 700) selon la revendication 1, **caractérisée en ce que** le conduit (102, 702) est constitué d'une pluralité de conduites (114, 714) qui s'étendent entre l'orifice inférieur d'entrée (104, 704) et l'orifice supérieur de sortie (106, 706), et **en ce que** les conduites (114, 714) sont disposées les unes à la suite des autres dans la direction de translation du volet (112, 612, 712).

3. Cheminée d'entrée d'air (100) selon l'une des revendications 1 ou 2, **caractérisée en ce que** ledit volet (112) affleure l'orifice inférieur d'entrée (104).

4. Cheminée d'entrée d'air (700) selon l'une des revendications 1 ou 2, **caractérisée en ce que** ledit volet (712) affleure l'orifice supérieur de sortie (706).

5. Cheminée d'entrée d'air (100) selon l'une des revendications 1 à 4, **caractérisée en ce que** le volet (112) prend la forme d'un coulisseau, et **en ce que** les moyens de régulation (108) comportent en outre un dispositif à glissière (110) prenant la forme d'un rail sur lequel coulisse ledit coulisseau.

6. Cheminée d'entrée d'air (100, 700) selon l'une des revendications 1 à 4, **caractérisée en ce que** le volet (612, 712) prend la forme d'un coulisseau, et **en ce que** les moyens de régulation (108) comportent en outre un dispositif à glissière (610, 710) prenant la forme de deux équerres en L fixées de part et d'autre du conduit (102, 702) et **en ce que** le coulisseau coulisse sur les deux bras horizontaux des équerres (610, 710).

7. Système d'aération (150, 750) d'un bâtiment (400) comportant un plancher (116, 118), un plafond (120) et au moins une rangée (122) de cases (124, 126) destinées à être occupées par au moins un animal, ledit système (150, 750) comportant:
- au moins une entrée d'air pur du bâtiment (400),
- au moins une sortie d'air vicié du bâtiment (400),
la ou chaque entrée d'air pur ou la ou chaque sortie d'air vicié étant couplée à des moyens d'aspiration de l'air (128, 130) prévus pour créer une surpression ou une dépression d'air à l'intérieur du bâtiment (400), et
- au moins une cheminée d'entrée d'air (100, 700) selon l'une des revendications 1 à 6 dont les conduits (102, 702) traversent le plancher (116, 118), dont les orifices inférieurs d'entrée (104, 704) sont disposés en dessous dudit plancher (116, 118) et communiquent avec la ou au moins une desdites entrée d'air pur, et dont les orifices supérieurs de sortie (106, 706) sont disposés au-dessus du plancher (116, 118) et en dessous du plafond (120) et communiquent avec la ou au moins une desdites sorties d'air vicié.

8. Système d'aération (150, 750) selon la revendication 7, **caractérisé en ce qu'**il comporte une unité (132) prévue pour commander les moyens de régulation (108, 708).

9. Bâtiment (400) comportant:
- un plancher (116, 118),
- un plafond (120),
- au moins une rangée (122) de cases (124, 126) destinées à être occupées par au moins un animal, et
- un système d'aération (150, 750) selon l'une des revendications 7 ou 8.

## Patentansprüche

1. Lufteintrittskamin (100, 700) für ein Belüftungssystem (150, 750) eines Gebäudes, wobei der Lufteintrittskamin (100, 700) Folgendes umfasst:
- eine Leitung (107, 702), die geeignet ist, einen Fußboden (116) des Gebäudes zu durchqueren und die eine untere Eingangsöffnung (104, 704) aufweist, die geeignet ist, um unter dem Fußboden (116) angeordnet zu sein, und eine obere Ausgangsöffnung (106, 706), die geeignet ist, um über dem Fußboden (116) angeordnet zu sein, und
- Reguliermittel (108, 708), die eine Klappe (112, 612, 712) umfassen, die in Bezug zu der Leitung (102, 702) zwischen einer geschlossenen Position und einer offenen Position beweglich montiert ist,
wobei der Lufteintrittskamin (100, 700) **dadurch gekennzeichnet ist, dass** eine der Seiten der Klappe (112, 612, 712) mit einer der Öffnungen (104, 704, 106, 706) bündig ist und dass die Klappe (112, 612, 712) in Verschiebung beweglich ist, und dass sie in geschlossener Position die Öffnung (104, 704, 106, 706) verschließt, und dass sie in offener Position die Öffnung (104, 704, 106, 706) nicht verschließt.

2. Lufteintrittskamin (100, 700) nach Anspruch 1, **dadurch gekennzeichnet, dass** die Leitung (102, 702) aus einer Vielzahl von Leitungen (114, 714) besteht, die sich zwischen der unteren Eingangsöffnung (104, 704) und der oberen Ausgangsöffnung (106, 706) erstrecken, und dass die Leitungen (114, 714) nacheinander in die Verschiebungsrichtung der Klappe (112, 612, 712) angeordnet sind.

3. Lufteintrittskamin (100) nach einem der Ansprüche 1 oder 2, **dadurch gekennzeichnet, dass** die Klappe (112) mit der unteren Eingangsöffnung (104) bündig ist.

4. Lufteintrittskamin (700) nach einem der Ansprüche 1 oder 2, **dadurch gekennzeichnet, dass** die Klappe (712) mit der oberen Ausgangsöffnung (706) bündig ist.

5. Lufteintrittskamin (100) nach einem der Ansprüche 1 bis 4, **dadurch gekennzeichnet, dass** die Klappe (112) die Form eines Schiebers hat, und dass die Reguliermittel (108) außerdem eine Vorrichtung mit Gleitführung (110) umfassen, die die Form einer Schiene hat, auf der der Schieber gleitet.

6. Lufteintrittskamin (100, 700) nach einem der Ansprüche 1 bis 4, **dadurch gekennzeichnet, dass** die Klappe (612, 712) die Form eines Schiebers hat, und dass die Reguliermittel (108) außerdem eine Vorrichtung mit Gleitführung (610, 710) haben, die die Form von zwei L-Winkeln hat, die auf jeder Seite der Leitung (102, 702) befestigt sind, und dass der Schieber auf den zwei horizontalen Schenkeln der Winkel (610, 710) gleitet.

7. Belüftungssystem (150, 750) eines Gebäudes (400), das einen Fußboden (116, 118), eine Decke (120) und mindestens eine Reihe (122) von Fächern (124, 126) umfasst, die dazu bestimmt sind, durch mindestens ein Tier besetzt zu sein, wobei das System (150, 750) Folgendes umfasst:
- mindestens einen Reinlufteingang des Gebäudes (400),
- mindestens einen Abluftausgang des Gebäudes (400),
wobei der oder jeder Reinlufteingang oder der oder jeder Abluftausgang mit Ansaugmitteln der Luft (128, 130) gekoppelt ist, die vorgesehen sind, um einen Luftüberdruck oder einen Luftunterdruck in dem Inneren des Gebäudes (400) zu schaffen, und
- mindestens einen Lufteintrittskamin (100, 700) nach einem der Ansprüche 1 bis 6, dessen Leitungen (102, 702) den Fußboden (116, 118) durchqueren, dessen untere Eingangsöffnungen (104, 704) unter dem Fußboden (116, 118) angeordnet sind und mit dem oder mindestens einem der Reinlufteingänge kommunizieren, und dessen obere Ausgangsöffnungen (106, 706) über dem Fußboden (116, 118) und unter der Decke (120) angeordnet sind und mit dem oder mindestens einem der Abluftausgänge kommunizieren.

8. Belüftungssystem (150, 750) nach Anspruch 7, **dadurch gekennzeichnet, dass** es eine Einheit (132) umfasst, die vorgesehen ist, um die Reguliermittel (108, 708) zu steuern.

9. Gebäude (400), umfassend:
- einen Fußboden (116, 118),
- eine Decke (120),
- mindestens eine Reihe (122) von Fächern (124, 126), die dazu bestimmt sind, durch mindestens ein Tier besetzt zu sein, und
- ein Belüftungssystem (150, 750) nach einem der Ansprüche 7 oder 8.

## Claims

1. Air inlet shaft (100, 700) for a ventilation system (150, 750) of a building, the air inlet shaft (100, 700) comprising:
- a duct (102, 702) intended to go through a floor (116) of the building and having a bottom inlet opening (104, 704) adapted to be disposed below the floor (116) and a top outlet opening (106, 706) adapted to be disposed above the floor (116), and
- adjustment means (108, 708) comprising a flap (112, 612, 712) mounted mobile relative to said duct (102, 702) between a closed position and an open position,
the air inlet shaft (100, 700) being **characterized in that** one of the faces of said flap (112, 612, 712) is flush with one of said openings (104, 704, 106, 706) and **in that** the flap (112, 612, 712) is mobile in translation and **in that** in the closed position it blocks said opening (104, 704, 106, 706) and **in that** in the open position it does not block said opening (104, 704, 106, 706).

2. Air inlet shaft (100) according to claim 1, **characterised in that** the duct (102, 702) consists of a plurality of passages (114, 714) that extend between the bottom inlet opening (104, 704) and the top outlet opening (106, 706), and **in that** the passages (114, 714) are disposed one after the other in the direction of translation of the flap (112, 612, 712).

3. Air inlet shaft (100) according to any one of claims 1 or 2, **characterised in that** said flap (112) is flush with the bottom inlet opening (104).

4. Air inlet shaft (700) according to any one of claims 1 or 2, **characterised in that** said flap (712) is flush with the top outlet opening (706).

5. Air inlet shaft (100) according to any one of claims 1 to 4, **characterised in that** the flap (112) takes the form of a slide, and **in that** the adjustment means (108) comprise also a slider device (110) taking the form of a rail on which said slide slides.

6. Air inlet shaft (100, 700) according to any one of claims 1 to 4, **characterised in that** the flap (612, 712) takes the form of a slide, and **in that** the adjustment means (108) comprise also a the slider device (610, 710) taking the form of two L-shaped brackets fixed on respective opposite sides of the duct (102, 702) and **in that** the slide slides on the two horizontal arms of the brackets (610, 710).

7. Ventilation system (150, 750) for a building (400) including a floor (116, 118), a ceiling (120) and at least one row (122) of crates (124, 126) intended to be occupied by at least one animal, said system (150, 750) including:
- at least one pure air inlet of the building (400),
- at least one vitiated air outlet of the building (400),
the or each pure air inlet and the or each vitiated air outlet being coupled to air aspiration means (128, 130) adapted to create an increased air pressure or a reduced air pressure inside the building (400), and
- at least one air inlet shaft (100, 700) according to any one of claims 1 to 6 the ducts (102, 702) of which pass through the floor (116, 118), the bottom inlet openings (104, 704) of which are disposed below said floor (116, 118) and communicate with the or at least one of said pure air inlets, and the top outlet openings (106, 706) of which are disposed above the floor (116, 118) and below the ceiling (120) and communicate with the or at least one of said vitiated air outlets.

8. Ventilation system (150, 750) according to claim 7, **characterised in that** it includes a unit (132) adapted to control the adjustment means (108, 708).

9. Building (400) including:
- a floor (116, 118),
- a ceiling (120),
- at least one row (122) of crates (124, 126) intended to be occupied by at least one animal, and
- a ventilation system (150, 750) according to either of claims 7 or 8.
